# EUROPÄISCHE PATENTANMELDUNG

(11) **EP 1 271 747 A1**
(43) Veröffentlichungstag der Anmeldung: **02.01.2003**
(21) Anmeldenummer: 01810625.2
(22) Anmeldetag: 27.06.2001
(51) Int. Cl.: H02K 5/128, H02K 9/19

(54) **Statorkühlung im Spaltrohrmotor**

(71) Anmelder: E + A Elektromaschinen und Antriebe AG, 4313 Möhlin (CH)
(72) Erfinder: Meyer, Rolf, 4310 Rheinfelden (CH); Tresch, Roger, 4313 Möhlin (CH)
(74) Vertreter: Frauenknecht, Alois J.

(57) **Zusammenfassung**

In Elektromotoren finden oft Spaltrohre Anwendung, welche eine Flüssigkeitskühlung des Stators ermöglichen. Erfindungsgemäss ist das Mittelteil (M) eines Spaltrohres (14) dünnwandiger ausgebildet als die Seitenteile (AL,LL). Diese Seitenteile sind zudem in ihrer Form und Materialwahl an die spezifischen thermischen Gegebenheiten angepasst. Besonders geeignet ist der Gegenstand für Werkzeugmaschinen mit Hauptspindelantrieben mit Mittelfrequenz-Synchronmotoren, da damit die Betriebstemperatur im antriebsseitigen Lager (9) herabsetzbar ist. Verfahrensgemäss wird bei sehr engen Lutspalten zwischen Stator (2) und Rotor (3) das Mittelteil (M) ausgedreht und kalibriert.

## Beschreibung

Der Erfindungsgenstand bezieht sich auf einen Mittelfrequenzmotor nach dem Oberbegriff des Patentanspruchs 1 und ein Verfahren zu dessen Herstellung.

Aus der DE -A1- 41 38 268 sind verschiedene Motoren mit flüssigkeitsgefüllten Statoren bekannt. Der in dieser Druckschrift beanspruchte Motor weist stirnseitig am Statorpaket dichtende Endringe auf, welche das Statorblechpaket gegenüber rohrähnlichen Lagerflanschen abdichten und wobei die beiden Spulenköpfe über ebenfalls abgedichtete Nutrohre mit durch diese zirkulierendem Kühlwasser beaufschlagt werden. Durch diese Massnahmen wird auf ein sonst übliches Spaltrohr zur Abdichtung des Statorraums gegenüber dem Rotorraum verzichtet. Der Statorraum ist zur verstärkten Kühlung an ein äusseres Umwälzsystem mit Wärmetauscher angeschlossen und verbleibt ständig unter Druck, so dass eine blasenfreie, optimale Kühlung der Statorwicklung erzielt wird.

Nachteilig sind der zur Einbringung von durchfluteten Nutrohren benötigte Raumbedarf im Statorpaket und die damit verbundene schlechte Nutzung des zur Verfügung stehenden Eisens sowie die aufwendige druckfeste und zudem wärmedämmende Abdichtung der Nutrohre und der Übergänge zu den beiden Endringen. Der in den Nutrohren durch die Statorwicklung verrengte Durchfluss verursacht hohe Druckverluste und erfordert eine entsprechend hohe Pumpleistung für die Umwälzung des Kühlwassers.

Es ist daher Aufgabe der Erfindung einen Motor zu schaffen, der die vorerwähnten Nachteile nicht aufweist und die Wärmeableitung und Kühlung von Motoren mit Drehzahlen über 3000 1/min verbessert. Insbesondere soll neben den elektrisch bedingten Verlusten auch die Reibungswärme in den Lagerstellen und im Luftspalt optimal abgeführt werden.

Die zur Kühlung eingesetzte Konstruktion soll einfach, wirtschaftlich und betriebssicher sein. Die Druckverluste im gesamten Kühlsystem müssen gering sein; als Kühlmedium soll auch höher viskoses Öl einsetzbar sein.

Die Erfindung soll vor allem für Synchronmotoren mit einem relativ grossen Luftspalt geeignet sein, aber auch in anderen Motortypen wie Asynchronmotoren Anwendung finden können.

Diese Aufgabe wird gemäss den Merkmalen des Patentanspruchs 1 gelöst.

Die im Patentanspruch umschriebene konstruktiv einfache wärmetechnische Trennung des Mittelteils des Spaltrohres von den Seitenteilen erlaubt eine Verbundbauweise, auch bei einem Luftspalt von nur wenigen Zehntels-Millimetern, und dadurch eine forcierte Wärmeabfuhr auch im Bereich der Lager und der Spulenköpfe der Statorwicklung.

Vorteilhafte Ausgestaltungen der Erfindung sind in weiteren Ansprüchen angegeben.

Besonders vorteilhaft ist eine Ausführung des Mittelteils des Spaltrohres aus einem Kunststoffe enthaltenden Teil, vgl. Anspruch 2. Durch eine formfüllende Verklebung des Rohrs mit der durch gestanzte Bleche gebildeten Statorbohrung ist ein kompaktes und dichtes Mittelteil, auch mit minimaler Wandstärke, herstellbar.

Durch den Einbau von Strömungsleitblechen gemäss Anspruch 3 lässt sich die örtliche Wärmeabfuhr optimieren, d.h. die Strömungsgeschwindigkeit des Kühlmediums an die örtliche Wärmeentwicklung anpassen.

Eine Erhöhung der Wärmekapazität und der Fläche mit Kühlflüssigkeit beaufschlagten Seitenteile des Spaltrohres lässt sich durch die in Anspruch 4 genannten Mittel leicht erzielen und erlaubt auch bei konstantem Kühlmittelfluss kurzzeitige Überlastungen des Motors, beispielsweise bei intermittierendem Betrieb.

Das in Anspruch 5 genannte Aufsetzen von Seitenteilen lässt sich auf verschiedene Art realisieren. Beispielsweise kann dies durch Einpressen der Seitenteile über eine entsprechende Passung, aber auch durch Kleben, Aufschrumpfen etc. erfolgen.

Eine besonders hohe Wärmeableitung ist durch Seitenteile mit Aluminium erzielbar, Anspruch 6.

Minimale Dicken des Spaltrohres lassen sich durch die im Anspruch 7 genannten Mittel nach der an sich bekannten Technologie von Verbundstoffen mit handelsüblichen Folien und Bändern realisieren.

Besonders für Asynchronmotoren mit ihrem vom Luftspalt abhängigen Leistungsfaktor sind die Massnahmen nach Anspruch 8 vorgesehen.

Eine einfache und thermisch günstige Verbindung zwischen dem Statorpaket und den Seitenteilen des Spaltrohres lässt sich beispielsweise durch Verkleben am vorgewärmten, rotierenden Stator mittels der sogenannten Träufelmethode, mit Polyester- oder Epoxydharz erzielen, Anspruch 9.

Eine Nachbearbeitung gemäss dem Verfahren nach Anspruch 10 erlaubt den Luftspalt nochmals zu reduzieren.

Nachfolgend wird die Erfindung an Hand von Zeichnungen beispielsweise näher erläutert. Dabei zeigt:
- Fig. 1: einen erfindungsgemässen Motor in einem Schnittbild,
- Fig. 2: eine Variante eines Endbereichs eines Spaltrohrs und
- Fig. 3: eine weitere, vereinfachte Variante eines Spaltrohrs.

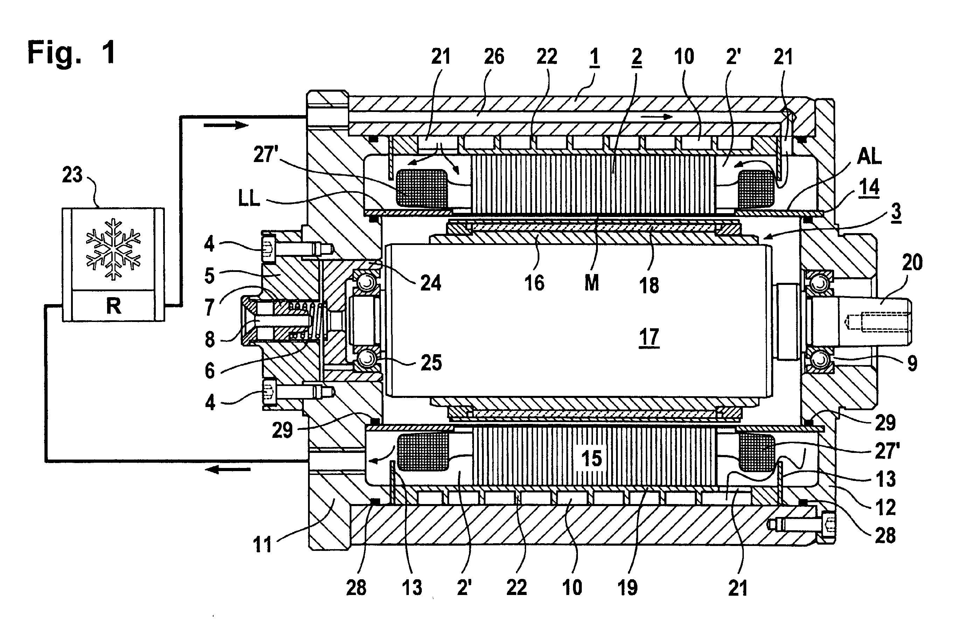

In Fig. 1 ist in einem Längsschnitt ein Mittelfrequenzmotor (97 kW, 40'000 1/min; 3 x 380 V, 1333 Hz, 4-polig) mit der erfindungsgemässen Kühlung gezeigt. Der Motor weist einen Stator 2 und einen Rotor 3 auf, die in einem üblichen zylindrischen Motorgehäuse 1 angeordnet sind. Das Gehäuse 1 ist beidseitig mit einem hinteren Loslager-Flansch 11 und einem antriebseitigen Flansch 12 abgeschlossen.

Der im Gehäuse 1 untergebrachte Stator 2 weist ein notorisch bekanntes Statorpaket 15 mit eingelegten Spulen auf, von denen in Fig. 1 lediglich die Spulenköpfe 27' sichtbar sind. Im Gehäuse 1 sind spiralförmig, durch Leitrippen 22 gebildete, umlaufende Kühlkanäle 10 vorgesehen, welche in einer den Stator 2 umgebenden Kühlbüchse 19 eingelassen sind. Ferner ist am Gehäuse 1 eine Druckleitung 26 angeschlossen, die über ein handelsübliches Kühlaggregat 23 die beiden Statorräume 2' über Durchlässe 21 in der Kühlbüchse 19 hydraulisch miteinander verbindet. Ausserdem sind am Gehäuse 1 auf beiden Stirnseiten ringförmige Strömungsleitbleche 13 angeordnet.

Der Rotor 3 besteht aus einer Welle 17 mit einem antriebsseitigen Wellenende 20 und einer Zwischenbüchse 16, in der in notorisch bekannter Weise Magnetstäbe 18 eingebracht sind. Die Welle 17 ist auf ihrer Antriebsseite in einem Schulterlager 9 gelagert. Auf der entgegengesetzten Seite ist die Welle 17 in einem weiteren Schulterlager 25 gelagert, welches sich in einer axial verschiebbaren Büchse 24 befindet. Darauf ist ein Ausgleichsgehäuse 5 aufgesetzt und mittels Schrauben 4 am Loslager-Flansch 11 befestigt. Das Ausgleichsgehäuse 5 enthält eine Druckbüchse 8, die über eine Justierschraube 7 verstellbar und durch eine Druckfeder 6 belastet und auf der Büchse 24 abgestützt ist.

Zwischen dem Stator 2 und dem Rotor 3 ist ein *per se* bekanntes Spaltrohr 14 angeordnet, welches über Dichtungen 29 flüssigkeitsdicht auf innenseitige Andrehungen der Flansche 11 und 12 aufgeschoben ist. Das Spaltrohr 14 ist an seinen das Blechpaket oder die Befestigung der Magnetstäbe des Rotors 3 überragenden beiden Seitenteilen AL und LL dicker ausgeführt als an seinem Mittelteil M. Das Material der Seitenteile AL, LL weist zudem eine gegenüber dem Mittelteil M höhere Wärmeleitfähigkeit auf. Die Teile AL, LL sind somit beidseitig dicht und lösbar mit den Flanschen 11, 12 verbunden.

In ähnlicher Weise sind die Flansche 11 und 12 gegenüber dem Gehäuse 1 abgedichtet; hier sind die entsprechenden O-Ringe mit 28, 29 bezeichnet.

Das antriebsseitige Lager 9 erwärmt sich insbesondere in hochtourigen Hauptspindelantrieben an Werkzeugmaschinen sehr stark und führt zu unerwünschten Längenänderungen der Welle 17. Ein Teil dieser Lagerwärme wird durch die hohe Wärmekapazität der Welle 17 aufgenommen. Der andere Teil der Lagerwärme wird über den sehr massiv ausgestalteten Lägerflansch 12 in den antriebsseitigen Statorraum 2' geleitet, der auf Grund der hier eintretenden Kühlflüssigkeit ein hohes Temperaturgefälle aufweist, und hier den Wärme-überschuss über das Kühlmedium abführt.

Die unvermeidbaren thermisch bedingten Längenänderungen der Rotorwelle werden durch diese Massnahmen beträchtlich reduziert, was sich beispielsweise bei Werkzeugspindeln positiv auf die Bearbeitungsgenauigkeit von Werkstücken auswirkt.

Das Mittelteil M des Spaltrohres 14 ist aus einem Kunststoffe enthaltenden Material (GFK) gefertigt, während die an diesem durch eine übliche Klebung gesicherten Seitenteile AL, LL aus einem metallischen Stoff bestehen oder zumindest metallisiert sind.

Das Kühlaggregat 23 (Rückkühler der Firma KLH, Bad Doberau, BRD; Typ EC7 mit 6 kW Kühlleistung) unterhält einen Kreislauf mit einem Kühlmittel, beispielsweise Transformatoren-öl. Das Kühlmittel wird dem Gehäuse 1 über die Druckleitung 26 zugeführt und breitet sich innerhalb des Statorraums 2' aus. Charakteristische, mit Pfeilen versehene, Stromfäden zeigen die Fliessrichtung des Kühlmittels im Statorraum 2' an.

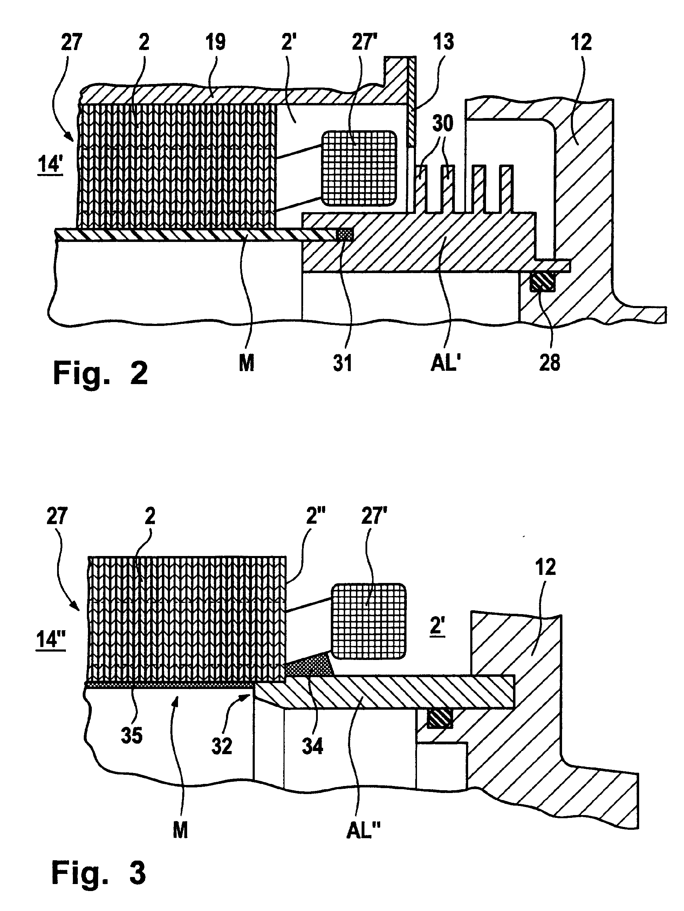

Alternativ lässt sich das Spaltrohr gemäss dem Ausschnitt Fig. 2 ausbilden. Das Seitenteil AL' des Spaltrohres 14' ist hier ein massiver Ring, der zudem mit zu diesem einstückigen Kühllamellen 30 versehen ist. Antriebsseitig ist das Seitenteil AL in eine Nut im Flansch 12 eingelassen und durch einen 0-Ring 28 abgedichtet. Auf der Gegenseite ist das Mittelteil M ebenfalls in eine Nut im Seitenteil AL und durch einen Klebstoff 31 kraftschlüssig und dicht fixiert. Der Stator 2, der Statorraum 2', die Statorspulen 27, der Spulenkopf 27', die Kühlbüchse 19 und das Strömungsleitblech 13 sind identisch zu Fig. 1. Auf Grund der gegenüber Fig. 1 grösseren Breite des Seitenteils AL ist der antriebsseitige Flansch 12 zur Antriebsseite hin versetzt, wodurch sich ein grösseres Kühlmittelvolumen und damit eine verbesserte Wärmeabfuhr ergibt.

Die vereinfacht dargestellte Ausführungsform nach Fig. 3 weist ein Spaltrohr 14" auf, welches sich im Mittelteil M aus einer Lackschicht 35 und an diese anschliessende Seitenteile AL" zusammensetzt. Das Seitenteil AL" ist über Andrehungen 32 an die Stirnseite 2" des Stators 2 formschlüssig angepasst. Fixiert ist das Ganze durch Giessharz 34, das nach der Träufelmethode eingebracht wurde. Die Lackschicht 35 besteht aus dem gleichen Material und ist je nach Verwendungszweck und Temperaturbereich der Wicklung aus handelsüblichem Polyesterharz oder Epoxidharz. Aufgrund des durch das Statorpaket erzeugten hohen Strömungswiderstandes genügt eine relativ dünne Lackschicht 35; sie muss nur die durch die Wärmedehnung der Bleche entstehenden Spalten elastisch überbrücken und ist aus Sicherheitsgründen vorgesehen.

Der Rotor - hier nicht dargestellt - ist in seiner Form ebenfalls an die Stirnseiten des Seitenteils AL" angepasst. Das hintere Seitenteil LL ist durch eine entsprechende Formung des Spulenkopfes 27' lediglich auf die hintere Stirnseite 2" des Stators 2, in analoger Weise, aufgesetzt und vergossen, so dass der Rotor von dieser Seite einschiebbar ist. Das Seitenteil LL kann zudem kürzer ausgeführt sein als das antriebsseitige Seitenteil AL", da hier, im Falle von Spindelantrieben, weniger Wärme entsteht.

Der Erfindungsgegenstand ist vorstehend nur beispielhaft erläutert. Er lässt sich konstruktiv an die jeweiligen Stator- und Rotorformen anpassen.

Zur Unterstützung des Wärmeflusses im Rotor und zur verbesserten Wärmeabgabe an die Seitenteile des Spaltrohrs lässt sich dieser zusätzlich mit an sich bekannten strömungstechnischen Mitteln ausrüsten, wie Ventilatorscheiben, Durchgangsbohrung in axialer Richtung etc.

Alternativ hierzu kann im Rotorraum, mit bescheidenem technischen Aufwand, ein Unterdruck erzeugt werden, welcher die Luftreibung im Spalt zwischen Spaltrohr und Rotoroberfläche reduziert und damit die dort bei Normaldruck entstehende Wärmemenge reduziert.

Ebenfalls ist eine Füllung des Rotorraums mit Schutzgas (Gaskapselung) denkbar, um die resultierende Reibungswärme zu reduzieren.

In relativ flachen Antrieben wird vorteilhafterweise auf die beschriebene Kühlbüchse verzichtet und der Aussendurchmesser des Statorpaketes vergrössert, was bei gleichem Raumbedarf eine höhere Nennleistung des Motors ergibt.

### Bezeichnungsliste

- 1: Gehäuse
- 2: Stator
- 2': Statorraum
- 2": Stirnseiten von 2
- 3: Rotor
- 4: Schrauben (Innensechskant)
- 5: Ausgleichsgehäuse
- 6: Druckausgleichsfeder
- 7: Justierschraube
- 8: Druckbüchse
- 9: Wälzlager, Schulterlager
- 10: Kühlkanäle
- 11: Loslager-Flansch
- 12: antriebsseitiger Flansch
- 13: Srömungsleitblech
- 14,14',14": = Spaltrohr
- 15: Statorpaket
- 16: Zwischenbüchse
- 17: Rotorwelle
- 18: Rotormagnetstäbe
- 19: Kühlbüchse
- 20: Wellenende von 17 (Konus)
- 21: Durchlass
- 22: Leitrippen
- 23: Kühlaggregat
- 24: Längenausgleichs-Büchse
- 25: Wälzlager, Schulterlager
- 26: Druckleitung
- 27: Statorspulen
- 27': Spulenköpfe
- 28,29: Dichtungen (0-Ringe)
- 30: Rippen auf AL'
- 31: Verklebung / Klebestellen
- 32: Andrehungen
- 34: Giessharz
- 35: Lackschicht
- AL,LL,AL',AL": = Seitenteile des Spaltrohres
- M: Mittelteil des Spaltrohres

## Patentansprüche

1. Elektrischer Mittelfrequenzmotor, insbesondere Synchronmotor mit einem flüssigkeitsdurchfluteten Stator, welcher durch ein Spaltrohr vom Rotor getrennt ist, welches flüssigkeitsdicht in Lagerflanschen gelagert ist, **dadurch gekennzeichnet, dass** das Spaltrohr (14) an den das Blechpaket oder die Befestigung der Magnetstäbe (18) des Rotors (3) überragenden beiden Seitenteilen (AL;LL) eine grössere Dicke aufweist als sein Mittelteil (M), dass die Seitenteile (AL, LL) eine gegenüber dem Mittelteil (M) höhere Wärmeleitfähigkeit aufweisen und formschlüssig und lösbar beidseitig die Lagerflansche (11, 12) kontaktieren.

2. Elektrischer Mittelfrequenzmotor nach Anspruch 1, **dadurch gekennzeichnet, dass** das Mittelteil (M) des Spaltrohrs (14) aus einem Kunststoffe enthaltenden Teil gefertigt ist, während die Seitenteile (AL;LL) zumindest Metalle enthalten und/oder metallisiert sind.

3. Elektrischer Mittelfrequenzmotor nach Anspruch 1, **dadurch gekennzeichnet, dass** in den Bereichen erhöhter Wärmeentwicklung, zumindest vor dem antriebsseitigen Spulenkopf (27') Strömungsleitbleche (13) angeordnet sind.

4. Elektrischer Mittelfrequenzmotor nach Anspruch 1 oder 2, **dadurch gekennzeichnet, dass** zumindest das antriebsseitige Seitenteil (AL) aussenseitig Kühlrippen aufweist.

5. Elektrischer Mittelfrequenzmotor nach Anspruch 1, **dadurch gekennzeichnet, dass** das Mittelteil (M) des Spaltrohrs (14) ein dünnwandiges Metallrohr ist, auf welches die ringförmigen Seitenteile (AL;LL) aufgesetzt sind.

6. Elektrischer Mittelfrequenzmotor nach einem der Ansprüche 1 bis 2 oder 4 bis 5, **dadurch gekennzeichnet, dass** die Seitenteile (AL;LL) aus Aluminium oder einer Aluminium-Legierung bestehen.

7. Elektrischer Mittelfrequenzmotor nach Anspruch 1, **dadurch gekennzeichnet, dass** das Mittelteil (M) des Spaltrohrs (14) ein mit der Statorbohrung verklebtes Band aus glasfaserverstärktem Material oder ein Band aus Kohlefasern ist.

8. Elektrischer Mittelfrequenzmotor nach Anspruch 1, **dadurch gekennzeichnet, dass** das Mittelteil (M) des Spaltrohrs (14) eine Lackschicht (35) ist, welche mit den Seitenteilen (AL;LL) ein Spaltohr bildet.

9. Elektrischer Mittelfrequenzmotor nach Anspruch 1 oder 8, **dadurch gekennzeichnet, dass** die Seitenteile (AL;LL) auf die Stirnseiten (2") des Stators 2 aufgeklebt sind.

10. Verfahren zur Herstellung eines elektrischen Mittelfrequenzmotors, insbesondere Synchronmotors, mit einem flüssigkeitsdurchfluteten Stator, welcher durch ein Spaltrohr vom Rotor getrennt ist, welches flüssigkeitsdicht in Lagerflanschen gelagert ist nach einem der Ansprüche 1 bis 9, **dadurch gekennzeichnet, dass** das Mittelteil (M) des Spaltrohrs (14) nach dessen Montage im Stator (2) nachbearbeitet und kalibriert wird.
